# EUROPEAN PATENT APPLICATION

(11) **EP 1 477 212 A1**
(43) Date of publication of application: **17.11.2004**
(21) Application number: 02710464.5
(22) Date of filing: 01.02.2002
(51) Int. Cl.: A63F 13/12

(54) **GAME EXECUTION SYSTEM AND GAME EXECUTION METHOD**

(71) Applicant: Aruze Corporation, Tokyo 135-0063 (JP); Seta Corporation, Tokyo 135-0063 (JP)
(72) Inventor: FUJIMOTO, Jun, c/o Aruze Corporation, Koto-ku, Tokyo 135-0063 (JP); NONAKA, Nobuyuki, c/o Seta Corporation, Koto-ku, Tokyo 135-0063 (JP)
(74) Representative: Grünecker, Kinkeldey, Stockmair & Schwanhäusser Anwaltssozietät
(86) International application number: PCT/JP2002/000838
(87) International publication number: WO 2003/063989

(57) **Abstract**

The present invention is characterized by a game control means for controlling a predetermined game, which allows the game to be executed between the game control means and a terminal according to an instruction from the terminal. The game control means thus allows the game to be executed between the game control means and the terminal, eliminating the need for executing one game all by itself, and reducing game processing load put on the game control means.

## Description

### Technical Field

The present invention relates to a game execution system and a game execution method.

### Background Art

Provision of games via the Internet has conventionally been done. In recent years, game systems which give an award to a game participant in accordance with a result of the game have been contemplated.

The game systems under contemplation include, for example, not only a casino system in which a prize is simply awarded for a result of a game but also a prize system in which a game for increasing the publicity of some goods or the like (e.g., a game in which to provide a predetermined prize to a user) is provided to resultantly attract increased customers.

The casino system and the prize system each need to be configured as a system in which a win or loss of a game can be varied for each participant for increasing the randomness of the result of the game. There can simply be two major schemes for configuring the system.

In a first scheme, software for use in executing a game is transmitted to an individual client terminal (a terminal of a participant to enter the game), so as to allow the client terminal to execute the transmitted software.

Then, according to the executed software, the client terminal determines the result of the game for deciding a win or loss of the game beforehand, for example, and transmits the decided game result to a host computer as an operator of the system (hereinafter referred to as a server). Receiving the game result from the client terminal, the server advances the game based on the received game result.

In a second scheme, a server keeps software for game execution, and decides a game result beforehand in a specified game, and advances the game to the predetermined game result.

The above-described first scheme has an advantage in that an individual client terminal initiates the software, so that the server as the operator of the system can have a reduced processing load produced when the game is executed, and the server, even having a small capacity, can deal with a large number of client terminals. However, it has a disadvantage in that it is necessary to verify the authenticity of each game result previously decided by the client terminal.

That is, it has a disadvantage in that there is a high possibility that a user will notify a false game result to the server via his or her client terminal, so as to fraudulently obtain a game result. The server must exclude a person trying to fraudulently obtain a game result.

On the other hand, the second scheme has an advantage in that the server decides a game result beforehand, so that the authenticity of game results can be sufficiently secured. However, it has a disadvantage in that, when the number of client terminals is increased, it is necessary to increase the communication capacity of the server and the throughput of the server, and also to reduce its internal processing load as much as possible.

The present invention has been made in view of the above problems, and has an object of providing a game execution system and a game execution method in which, without imposing an excessive processing load on a server, a person performing fraudulent manipulation with respect to the server controlling the game can be securely excluded, thereby to improve the security of a game performed between the server and a client terminal.

### Disclosure of the Invention

In order to achieve the above object, the present invention is characterized by a game control means for controlling a predetermined game, which allows the game to be executed between the game control means and a terminal according to an instruction from the terminal. The game may be a mass game a plurality of users enter. The mass game may be a competitive game in which a plurality of racehorses race and placings of each of the racehorses are decided.

According to the present invention like this, since the game control means for controlling a predetermined game can allow the game to be executed between the game control means and a terminal according to an instruction from the terminal, it is not necessary for the game control means to execute one game all by itself, resulting in a reduced game processing load put on the game control means.

The present invention is characterized in that the game control means is configured to control the game including a plurality of programs, and the terminal is configured to obtain some of the programs controlled by the game control means, and to execute part of the game based on the obtained programs.

According to the present invention like this, since the terminal can obtain some of the programs controlled by the game control means and execute part of the game based on the obtained programs, it is not necessary for the game control means to execute all the programs for executing the game by itself, resulting in a reduced game processing load put on the game control means.

The present invention is characterized in that a racehorse to win the competitive game is decided, and the competitive game is advanced such that the decided racehorse wins the game.

According to the present invention like this, since the game control means previously decides a racehorse to win a competitive game (a result of a game), the game control means can exclude a person trying to fraudulently decide a winning racehorse from an external terminal, so as to increase the authenticity of a result of the game.

The present invention is characterized in that an entry time in which the user can enter the game is managed, and the racehorse to win the competitive game is decided (a final result of the game is decided) before the managed entry time elapses. The game control means may alternatively decide a final result of the game before a start time to display effect contents of the game elapses.

According to the present invention like this, since the game control means decides a racehorse to win a competitive game (a result of a game) within the entry time, the game control means can decide a game result of a game before the game is started, so as to secure the authenticity of the game result early.

The present invention is characterized in that forecast information showing a forecast of a winning racehorse in the competitive game is obtained from the user before the entry time elapses, and it is determined whether the winning racehorse forecasted and included in the forecast information agrees with the winning racehorse decided by the decision means or not, based on the obtained forecast information, and a predetermined amount of money is paid to the user, based on the determination.

According to the present invention like this, when determining that the forecasted winning racehorse included in the forecast information obtained from the user agrees with the winning racehorse decided by the decision means, the game control means can pay a predetermined amount of money (payoff) to the user, resultantly increasing the number of users to enter games.

Further, a user, when his or her forecast is right, can get a predetermined payoff from the game control means, so as to enjoy a more heated competitive game to increase his or her money.

Further, the present invention is characterized in that, after a lapse of the entry time, effect contents of the racehorses to race in the competitive game are decided, and the decided effect contents are displayed. The game control means may alternatively cause effect contents of a game to be displayed when the managed start time elapsed.

According to the present invention like this, since the game control means decides effect contents of the racehorses to race in the competitive game after a lapse of the entry time, a user can see the effect contents decided by the game control means through a screen, so as to spend an enjoyable time before the final game result is displayed on the screen.

The present invention is characterized in that the number of users entering the game is counted, and the effect contents are decided based on the counted number of users.

According to the present invention like this, since the game control means can decide effect contents in accordance with the number of users entering a game, the game control means can cause effect contents of racehorses to race in the competitive game to be displayed on screens through various effect contents. As a result, since effect contents displayed on a screen vary, a user can spend an enjoyable time before the final game result is displayed on the screen.

The game control means may decide an effect time of the effect contents based on the counted number of users. Since the game control means can decide an effect time of effect contents to be displayed on a screen based on the number of users, when the number of users is large, for example, it can set the effect time of the effect contents longer, so that a plurality of users can spend an enjoyable time with other users before the final game result is displayed on screens.

The game control means may change effect contents or extend an effect time based on whether a user's forecast information is right or wrong. Also, the game control means may notify a terminal of a result with respect to whether a user's forecast information is right or wrong, or a final result of a game. Also, the game control means may notify a terminal of a result with respect to whether a user's forecast is right or wrong, or the final result, after a lapse of the start time.

The present invention is characterized in that identification information identifying the user is obtained, and it is checked whether the user is an authentic person or not based on the obtained identification information, and some of the programs of the game are transmitted based on the result of the checking.

According to the present invention like this, since the game control means transmits some programs of a game to a terminal after the user's identification is authenticated, the game control means can securely exclude people fraudulently downloading the programs of the game.

### Brief Description of Drawings

FIG. 1 is a schematic diagram of a game execution system of the present invention;
FIG. 2 is a diagram illustrating the internal configuration of a server;
FIG. 3 is a diagram illustrating the contents of data stored in a personal information database;
FIG. 4 is a diagram exemplarily illustrating a home page provided from a game controlling apparatus;
FIG. 5 is a flow chart illustrating a registration process for a user to be offered a game from the game controlling apparatus;
FIG. 6 is a flow chart illustrating a process flow when the game controlling apparatus provides a game to a user;
FIG. 7 is a flow chart illustrating a flow in a game execution method of the present invention;
FIG. 8 is a flow chart illustrating a process flow when the game controlling apparatus terminates the provision of a game to a user; and
FIG. 9 is a flow chart illustrating a process flow when the game controlling apparatus settles a predetermined amount of money with a financial institution.

### Best Mode for Carrying Out the Invention

### (A) Embodiment

An embodiment of the present invention will be described with reference to the drawings. The description below will be made with a mass game a plurality of users enter, but alternatively, description may be made with another game. In this embodiment, description will be made with a competitive game in which a plurality of racehorses race and placing of each racehorse is decided.

The mass game may be, for example, a game such as a horse race, a track and field competition or a swimming race in which the result of the competition is forecasted, or a game such as roulette involving no competition. Other games than mass games include, for example, a slot machine and pachinko games.

### (A-1) Configuration of the Embodiment

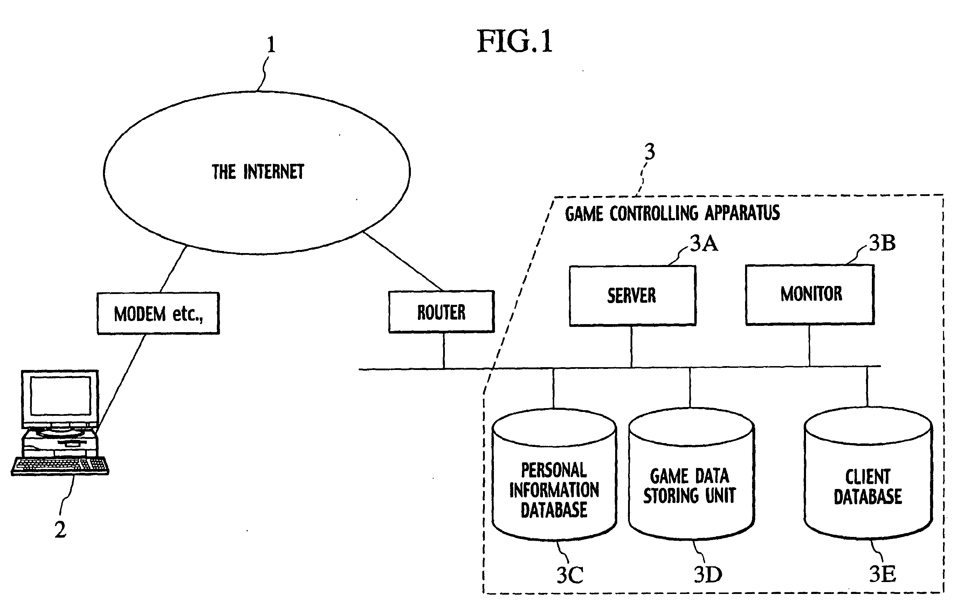

FIG. 1 is a block diagram illustrating the configuration of a game execution system according to the present embodiment.

As shown in FIG. 1, the game execution system has a game controlling apparatus 3 (game control means) for controlling a predetermined game, which allows the game to be executed between the game controlling apparatus 3 and a client terminal 2 according to an instruction from the client terminal 2 (terminal).

In FIG. 1, in this embodiment, only a single client terminal 2 is connected to the Internet 1, but it is also possible for a plurality of client terminals 2 to connect to the system using the present invention. The Internet 1 may be a communication network used by cable television.

The client terminal 2 has a function of connecting to the Internet 1 (communication unit), a function of receiving instructions and the like from a user (input unit), and a function of displaying a game or a result of the game (display unit).

The client terminal 2 is also a terminal configured to obtain some of the programs controlled by the game controlling apparatus 3, and to cause part of a game to be executed based on the obtained programs. In this embodiment, the programs executed by the client terminal 2 include a bet program and a race effect program. These programs will be described below.

The client terminal 2 may be a computer terminal (including a display function), a game terminal having an Internet function, a cellular phone having an Internet function, a terminal included in a household appliance and having an Internet function, a composite terminal having a display unit (e.g., a television receiver) in any of the above devices, or the like.

The connection between the client terminal 2 and the Internet 1 may be established using a modem, terminal adapter, router or the like. The connection between the client terminal 2 and the Internet 1 may be established by wire (a telephone line, an ISDN line, a cable connection or the like) or by radio.

The game controlling apparatus 3 is configured to control a game including a plurality of programs. In this embodiment, the game controlling apparatus 3 has a server 3A, a monitor 3B, a personal information database 3C, a game data storing unit 3D and a client database 3E, which components are connected and arranged with a bus.

The game controlling apparatus 3 may also have a printer for printing out a game result or the like, and an input apparatus (e.g., a keyboard or the like) for inputting any predetermined information.

FIG. 1 shows the configuration in which the game controlling apparatus 3 is directly connected to the Internet 1 via a router, but it is also possible to dispose a fire wall at an appropriate location for protecting personal information and maintaining the authenticity of game results.

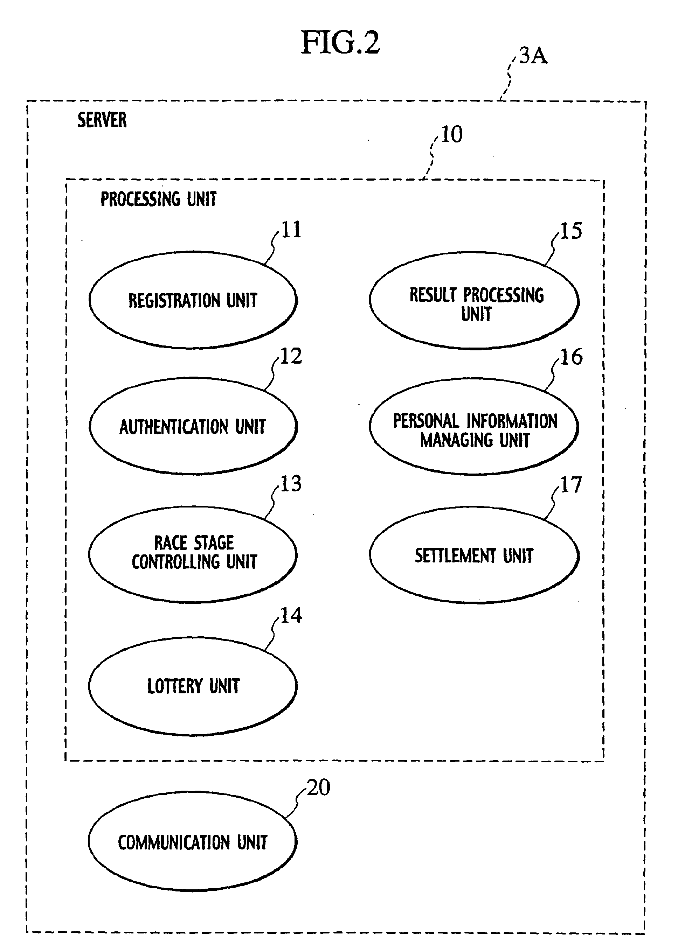

The server 3A has function of executing a predetermined game with the client terminal 2. In this embodiment, as shown in FIG. 2, the server 3A has a processing unit 10 including a registration unit 11, an authentication unit 12, a race stage controlling unit 13, a lottery unit 14, a result processing unit 15, an information managing unit 16 and a settlement unit 17, and a communication unit 20.

The communication unit 20 may alternatively be provided in another dedicated server, so as to distribute communication load produced between the server 3A and the client terminal 2. Programs for the respective functions executed by the server 3A may be stored in the sever 3A or in the game data storing unit 3D.

The registration unit 11 is configured to store (register) information on participants who can enter a competitive game in the personal information database 3C. Upon registered in the personal information database 3C by the registration unit 11, the participants can enter a competitive game at any timing.

The authentication unit 12 is an authentication means for obtaining identification information identifying a participant, and checking (determining) whether a user is an authentic person or not, based on the obtained identification information.

In this embodiment, before a user enters a game, the user is assumed to obtain identification information from the game controlling apparatus 3. The identification information identifies the user, and may be a particular authentication number assigned by the game controlling apparatus 3, for example.

The authentication unit 12 checks the identification information (or authentication number) obtained from the user with a prestored identification information group, and verifies that the user is an authentic person when the identification information is included in the identification information group. On the other hand, when the identification information is not included in the identification information group, the authentication unit 12 determines that the user is not an authentic person.

Also, The authentication unit 12 is a transmission means for transmitting some programs of a game, based on the result of checking. Specifically, in this embodiment, when determining that the user is an authentic person, the authentication unit 12 transmits the bet program, race effect program and the like to the client terminal 2.

The client terminal 2 thus obtains the bet program and the race effect program from among the programs controlled in the game controlling apparatus 3, so as to perform various processing based on the obtained programs. Thus, the game controlling apparatus 3 does not need to execute all the programs for executing a competitive game by itself, resulting in a reduced processing load put thereon.

On the other hand, when determining that the user is not an authentic person, the authentication unit 12 does not transmit the bet program and the like to the client terminal 2. The game controlling apparatus 3 can thus prevent the bet program and the like from being transmitted to a user when determining that the user is not authentic, so as to exclude a person fraudulently downloading the bet program and the like.

Also, in each race, when receiving data on the forecast of a winning racehorse and a bet on the race from the client terminal 2, the authentication unit 12 determines whether the received data is authentic or not. Processing for the determination will be described in detail below.

More specifically, in the case where the bet program and the race effect program are stored in the game data storing unit 3D, the authentication unit 12 obtains the programs from the game data storing unit 3D based on an instruction from the client terminal 2, and transmits the obtained programs to the client terminal 2.

In this embodiment, the bet program is software for obtaining forecast information including the forecast of a winning racehorse in a race (e.g., a forecast in a "win" system, a "quinella" system, a "frame-number quinella" system or a "quinella place" system) and a bet on the forecast, for example, from a user. The bet program is also software for displaying racehorses and odds given to each racehorse in each race.

The race effect program is software for the processing of deciding effect contents of each racehorse to run a predetermined race, and causing the decided effect contents to be displayed on a screen. The effect contents may be automatically decided by the race effect program (immediately after the race is started).

Specifically, the authentication unit 12 generates a race effect program for each race for providing predetermined effect contents, and the client terminal 2 obtains the race effect program generated by the authentication unit 12, so as to display the effect contents on the screen, based on the obtained race effect program.

For the effect contents displayed on the screen by the client terminal 2 executing the race effect program, effect contents provided in a pachinko game machine, for example, may be used (e.g., see the description and drawings of Japanese Patent Application No. 1999-244279).

The race stage controlling unit 13 is an advancement means for advancing a game such that a winning racehorse decided by the lottery unit 14 wins the race, and is configured to perform game processing including a lottery according to the stage of the race.

The race can be divided into the stage of deciding racehorses to run a race and odds to be given to the racehorses and transmitting the decisions to the client terminal 2; the stage of obtaining forecast information including a winning racehorse forecasted by a user in a race and a bet the user places on the race; the stage of providing an instruction to display effect contents of the race according to the race effect program; and the stage of performing processing for the game controlling apparatus 3 to give certain payoffs to participants, for example. Control performed at each stage by the race stage controlling unit 13 will be explained with the description of operation below.

The lottery unit 14 is a final decision unit for deciding previously the final result of a game (race). In this embodiment, the lottery unit 14 has a random number function of randomly varying numbers (or codes) (random number selection scheme), so as to decide the placings of racehorses (also to decide a winning horse).

The range of numbers varied by the random number function can be decided according to odds given to each racehorse to run in a race, for example. The word "lottery" means the decision of the final result of a game, and in this embodiment, includes the decision of a winning racehorse the placings of racehorses and the like.

More specifically, the lottery unit 14 selects a number from among numbers randomly varied by the random number function, and decides the placing of each racehorse based on the placing of the racehorse associated with the selected number.

Since the lottery unit 14 decides the placing of each racehorse using the random number function, the lottery unit 14 can randomly decide the placing of a racehorse to win in a race, so as to make it difficult to forecast a winning horse.

The lottery unit 14 may obtain effect contents of each racehorse in a race from the game data storing unit 3D based on the decided placing of the racehorse, and transmit the obtained effect contents to the client terminal 2.

Since the lottery unit 14 can decide effect contents of each racehorse to run in a race based on the placing of the racehorse, effects of each racehorse in a race can be set complicated (e.g., multiple patterns of effects), resulting in the development of effect contents keeping users' interest.

The lottery unit 14 may also randomly decide racehorses to run in a race using the above-described random number function. Also, the lottery unit 14 may decide different placings of racehorses for different client terminals 2.

The lottery unit 14 may also have a time management means for managing an entry time (or also referred to as a 'bet time") during which users can enter a game. With this, the lottery unit 14 can select a winning racehorse from among racehorses to run in a competitive game before the entry time managed by the time management means elapses.

The lottery unit 14 may also be a start control means for managing a start time to start the display of the effect contents. When the start time managed by the start control means elapsed, the server 3A may cause effect contents of a game to be displayed on the client terminal 2. The client terminal 2 thus causes the effect contents of the game to be displayed after a lapse of the start time, so as to make the start of the game clear.

The lottery unit 14 may also be a final decision means for deciding the final result of a game before the managed start time elapses. The race stage controlling unit 13 can also serve as an effect decision means for changing effect contents of each racehorse to run in a competitive game after a lapse of the managed entry time (this function will be described in detail below).

The race stage controlling unit 13 may also serve as a count means for counting the number of participants to enter a competitive game, and as an effect decision means for changing effect contents (or an effect time of effect contents) according to the number of participants decided by the count means.

The race stage controlling unit 13 serves as a determination means (or a result determination means) for determining whether a forecasted winning racehorse included in forecast information agrees with a winning racehorse decided by the lottery unit 14, based on the forecast information obtained by the communication unit 20 (in this embodiment, the forecast information means a forecasted result such as a winning racehorse forecasted by a user).

The result processing unit 15 is configured to calculate an amount of money (payoff) to pay to each user in each race, based on the determination by the race stage controlling unit 13. The result processing unit 15 is also configured to add up payoffs a user has got through races, and to store the amount in the client database 3E, and also to transmit information such as a winning racehorse in a race, payoffs in an ongoing race, and the like.

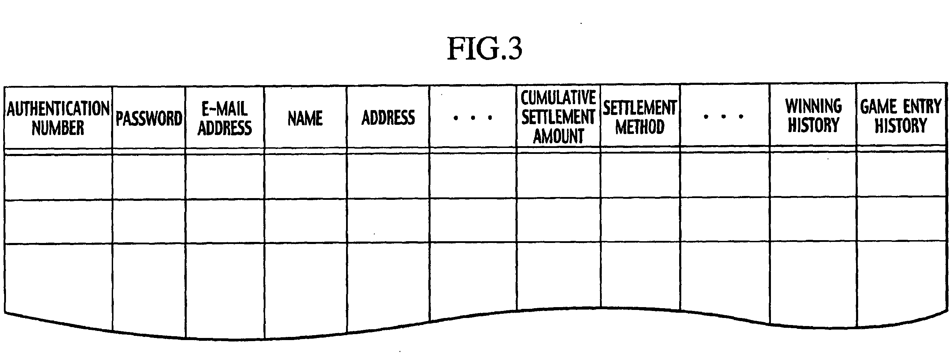

The personal information managing unit 16 is configured to manage various information on qualified participants stored in the personal information database 3C (see FIG. 3). Stored in the personal information database 3C are an authentication number and a password for use in authentication between the client terminal 2 and the game controlling apparatus 3, an e-mail address of a participant, the name/address of the participant, a cumulative settlement amount of an accumulated amount of money such as the amount of payoffs the participant has got through races, a settlement method showing the method of paying an amount of money such as a payoff, a winning history showing the past history of right forecasts by the participant, a game entry history showing which races the participant entered in the past (e.g., the number of entries, the dates of entries and the kinds of games entered), and so on.

The settlement unit 17 is configured to settle, for each user, a cumulative settlement amount including an entry fee a participant pays for entry in a race, a payoff the participant has got in a race, and the like (hereinafter referred to only as a "cumulative settlement amount").

When the cumulative settlement amount is plus, the personal information managing unit 16 performs processing for paying an amount of money corresponding to the cumulative settlement amount to a financial institution account of the participant. On the other hand, when the cumulative settlement account is minus, the personal information managing unit 16 charges an amount of money corresponding to the cumulative settlement amount to the financial institution account of the participant.

A participant can specify several financial institution accounts instead of a single financial institution account. In the description of operation made below, the settlement method is limited, but this settlement method is not limiting and another settlement method may be used instead.

Other settlement methods include a method in which settlement of bets is done separately from the settlement of payoffs, for example. The settlement of bets or the like may be made by withdrawing the amount from a predetermined amount of money deposited in a convenience store or the like.

The communication unit 20 is configured to perform processing for transmitting and receiving data to and from the client terminal 2. Also, the communication unit 20 is an obtainment means for obtaining forecast information showing the forecast of a winning racehorse in a competitive game from a user. Furthermore, the communication unit 20 is a notification means for transmitting, to the client terminal 2, a result of a game (a final result of a game) or the result of determining whether forecast information is right or wrong. The communication unit 20 may transmit a result of a game or the like after the game is started.

The monitor 2B is configured to show a game operator the status of progress of race processing and the like.

The game data storing unit 3D is configured to store programs and data for the respective units of the server 3A to execute processing, and programs and data to be transmitted to the client terminal 2. The client database 3E is configured to store information on a game a user enters, for each participant.

Also, the client database 3E is configured to store cumulative settlement amounts generated one day (hereinafter referred to as day cumulative settlement amounts), history information and so on. The personal information database 3C, game data storing unit 3D and client database 3E may be a hard disk, a readable/writable optical disk or the like, for example.

### (A-2) Operation in the Embodiment

A game execution method with the game execution system having the above configuration can be implemented by the following process:

### (A-2-1) Registration of Qualified Participants

First, in this embodiment, a person who wants to enter a Competitive game (participant) has to register for entry into a predetermined game.

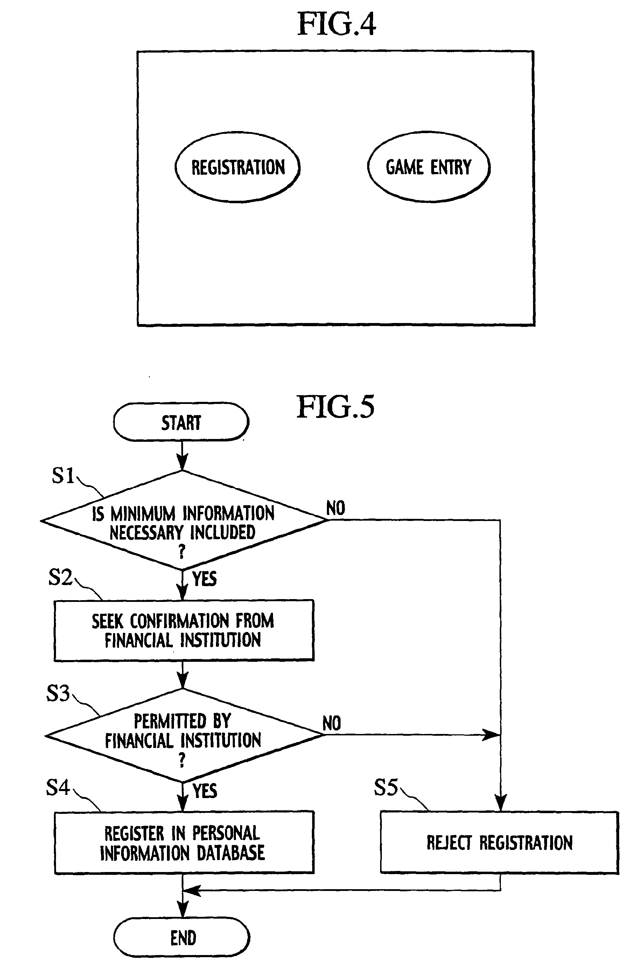

Specifically, when a user accesses a home page of the game controlling apparatus 3, using a client terminal 2, according to an instruction from the user, the game controlling apparatus 3 causes the home page including a "Registration" icon and an "Game Entry" icon shown in FIG. 4 to be displayed on the client terminal 2.

To register, the user clicks the "Registration" icon. For the click, the user inputs information (registration information) necessary for registration on an input screen displayed on the client terminal 2. After the input of the registration information on the input screen, the client terminal 2, upon a click operation by the user, transmits the input registration information to the game controlling apparatus 3. The game controlling apparatus 3 may cause the input screen to be displayed together with the home page.

Receiving the registration information from the client terminal 2 via the Internet 1, the server 3A, as shown in the flow chart of FIG. 5, first checks whether the given registration information includes minimum information required for registration or not (step S1).

Then, based on information on a user-specified financial institution included in the registration information, the sever 3A inquires of the financial institution whether the user is an authentic person or not (step S2, step S3). In this embodiment, an "authentic person" means a person who has capacity to pay a predetermined fee.

The server 3A, when obtaining the result that the user is an authentic person and the financial institution account of the user can be used (permission) from the financial institution, can charge a predetermined fee to the financial institution account of the user entering a game which causes the fee (or pay into the financial institution account), with respect to the financial institution.

Then, the server 3A, when obtaining the result that settlement with the user is possible (permission) from the financial institution, generates an authentication number (or also referred to as a registration number) for allowing the user to enter the game, based on the obtained permission, so as to transmit the generated authentication number to the client terminal 2 and to store it in the personal information database 3C.

In this embodiment, registration means the storing of the authentication number in the personal information database 3C by the server 3A. Thereafter, the server 3A notifies the client terminal 2 of the completion of the registration (step S4).

On the other hand, when the registration information transmitted from the client terminal 2 does not include minimal information required, or permission cannot be obtained from the financial institution, the server 3A notifies the user of the fact that he or she cannot register in the game information providing unit 3 (step S5).

When notified of the completion showing the completion of the registration from the server 3A, the client terminal 2, based on the completion notification, causes contents showing that the user has been registered in the game controlling apparatus 3 and has got qualification to enter the game to be displayed on the display screen, and also causes the "Game Entry" icon to be displayed on the display screen.

### (A-2-2) Application of Game Entry

When a user having registered as a qualified participant enters a competitive game, the user clicks the 'Game Entry" icon displayed on the client terminal 2.

When the user clicks the "Game Entry" icon, the client terminal 2 transmits to the server 3A a selection signal showing that the "Game Entry" icon has been selected.

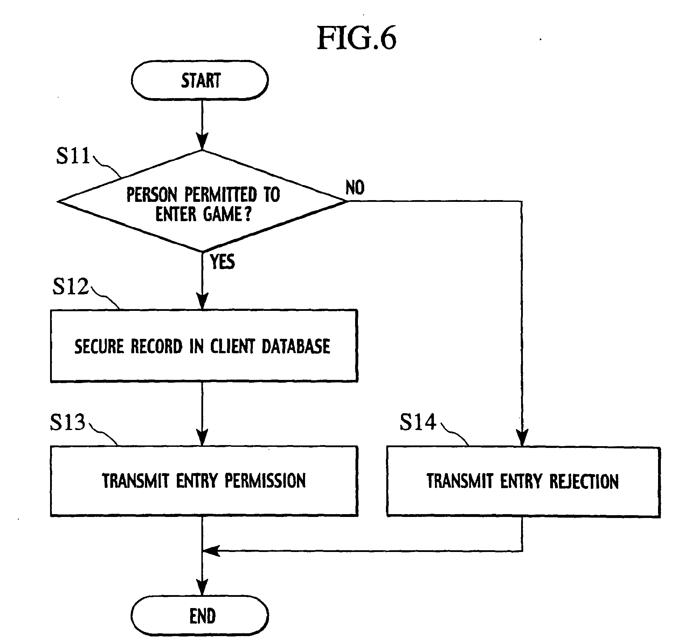

Receiving the selection signal from the client terminal 2, the server 3A (authentication unit 12) first checks, as shown in FIG. 6, based on the received selection signal, an authentication number (or identification information) included in the selection signal with an authentication number group (or an identification information group) stored in the personal information database 3C, as shown in the flow chart of FIG. 6.

When determining that the authentication number group includes one corresponding to the identification information included in the selection signal, the authentication unit 12 determines that the user is a person having qualification to enter the game (step S11).

Upon the above determination, the authentication unit 12 secures a memory area in the client database 3E for storing a history of the game (step S12), and transmits an entry notification to tell of eligibility to enter the game to the client terminal 2, together with the bet program and the race effect program (step S13).

Receiving the entry notification from the authentication unit 12, the client terminal 2 executes, based on the received entry notification, the bet program and the race effect program associated with the entry notification, and displays contents of the entry notification. After displaying the contents of the entry notification on a display screen, the client terminal 2 displays a waiting screen before the start of a predetermined race.

On the other hand, when determining that the authentication number group does not include one corresponding to the identification information included in the selection signal, the authentication unit 12 determines that the user is a person having no qualification to enter the game. Upon the determination, the authentication unit 12 transmits a rejection notification to tell that the user cannot participate in the game to the client terminal 2 (step S14).

Although in the above description, the game controlling apparatus 3 transmits the bet program and the race effect program to the client terminal 2 after the completion of determination as to whether the user has entry qualification or not, it may alternatively transmit them to the client terminal 2 at the stage where the registration processing (see FIG. 5) has completed.

### (A-2-3) Processing in One Race

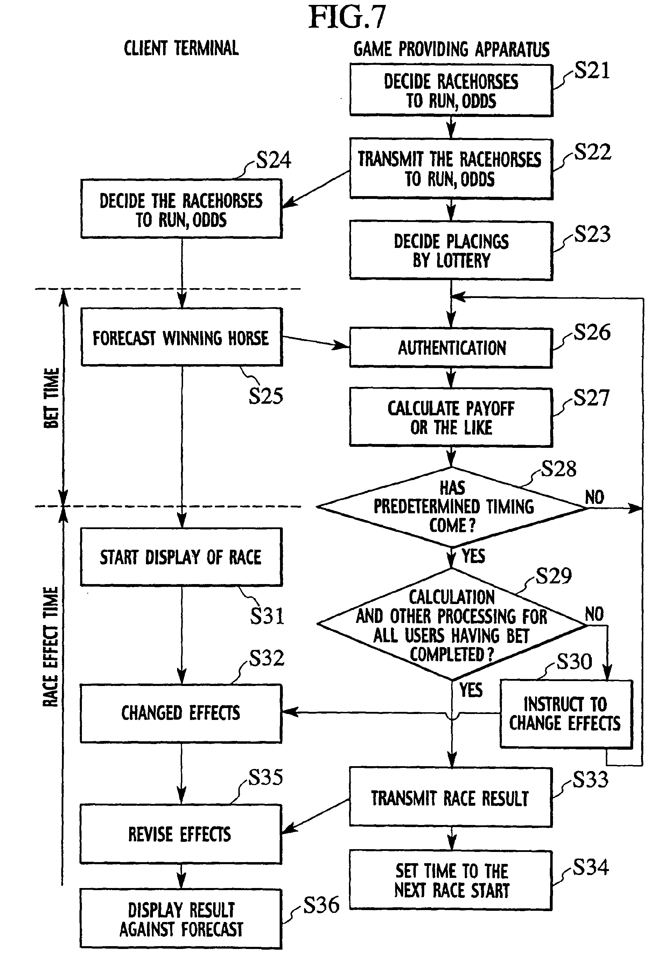

FIG. 7 is a flowchart illustrating a process performed by the client terminal 2 and the game controlling apparatus 3 for each race. Illustrated in FIG. 7 is race processing with a single client terminal 2, but the same race processing can be performed with a plurality of client terminals 2.

First, when a set time set by a timer (e.g., a time in which previous race processing is completed) elapsed, the race stage controlling unit 13 moves to the next race processing, so as to determine horses to run the race, the number of racehorses, and odds for each racehorse (step S21).

In this embodiment, the odds of a racehorse means a numerical value resulting from dividing a reference numerical value by the number of entries who forecast winning of a particular racehorse in a race. For example, the race stage controlling unit 13 may alternatively decides odds for each racehorse, based on ability information of the racehorse stored in the game data storing unit 3D (e.g., the number of winning races up to that time, the age of the racehorse, information on the rider and the like).

The race stage controlling unit 13 also decides specific racehorses by random number function of randomly varying numbers (or codes). The race stage controlling unit 13 also decides a period of time (selection time) in which a participant can select racehorses in a race.

After the decisions on the racehorses, odds and selection time through the above steps, the race stage controlling unit 13 transmits the decided racehorses, odds and selection time as decision information to the client terminal 2 (step S22). The race stage controlling unit 13 can transmit decision information to a plurality of client terminals 2 all at once. The transmission can be done using a packet broadcast function (multicast function) or the like.

Then, before the selection time elapses, the race stage controlling unit 13 causes the lottery unit 14 to operate to decides the placings of the racehorses in a race (step S23). The order of processing done in steps S22 and S23 may be reversed.

Next, receiving the decision information from the game controlling apparatus 3, the client terminal 2 displays the racehorses, odds, selection time, and so on, based on the received decision information (step S24).

Then, the client terminal 2 prompts the user to input forecast information including the forecast of a winning racehorse in the race, the amount of money to bet on the forecasted racehorse, and so on, before a lapse of the selection time.

Then, after receiving the forecast information from the participant, the client terminal 2 prompts the user to click a "Confirmation" icon on the display screen, and then transmits the input forecast information to the game controlling apparatus 3 (step S25). The above processing in the client terminal 2 can be executed according to the bet program previously transmitted from the game controlling apparatus 3.

Then, after receiving the forecast information from the client terminal 2, the race stage controlling unit 13 determines whether the forecast information is authentic or not, based on the received forecast information (step S26). This determination can depends on whether it is forecast information of a participant for whom registration processing was previously performed.

The race stage controlling unit 13 can thus exclude forecast information received from a person other than participants for whom registration processing was done, so as to securely exclude fraudulent access.

Then, the race stage controlling unit 13 checks the lottery result determined in the result processing unit 15 (the placings of the racehorses to run the race) against the forecast information received from the client terminal 2. When the placing(s) of the racehorse(s) included in the forecast information is identical with the placing(s) of the racehorse(s) included in the lottery result, the race stage controlling unit 13 determines that the participant's forecast is right.

On the other hand, the race stage controlling unit 13 checks the lottery result determined in the result processing unit 15 (the placings of the racehorses to run the race) against the forecast information received from the client terminal 2. When the placing(s) of the racehorse(s) included in the forecast information is not identical with the placing(s) of the racehorse(s) included in the lottery result, the race stage controlling unit 13 determines that the participant's forecast is wrong.

When determining that the participant's forecast is right, the race stage controlling unit 13 calculates a payoff to the user based on the odds included in the forecast information, and updates the client data base 3E for the calculated payoff (in this embodiment, updates the day cumulative settlement amount) (step S27).

The race stage controlling unit 13 also checks, at predetermined timing, whether processing done in steps S26 and S27 is completed or not for all client terminals 2 having entered the race (steps S28, S29). The predetermined timing may be the point of time at which the selection time elapsed, for example.

When the race stage controlling unit 13 determines that the processing (steps S26 and S27) done for all the participants having entered the race has not been completed, the race stage controlling unit 13 decides change contents for changing the effect contents of the ongoing race, and transmits the decided change contents to the client terminals 2 (step S30).

The race stage controlling unit 13 can thus change the effect contents of the ongoing race one after another when the processing on all the client terminals 2 is not completed, so that the participants can further enjoy the development of the race through the change contents changed one after another.

The race stage controlling unit 13 can set the kind of change contents according to the number of participants for whom the processing in steps S26 and S27 has not been completed. For example, when the number of participants having not bet yet is large, the race stage controlling unit 13 can provide change contents having a long effect time, and when the number of participants having not bet is small, provide change contents having a short effect time.

Since the race stage controlling unit 13 can thus decide change contents according to the number of participants, the race stage controlling unit 13 can decide change contents with which many participants can enjoy a more heated development of a game when the number of participants having not bet yet is large.

Also, the race stage controlling unit 13 is an extension means for extending the effect time of effect contents being displayed, based on whether a participant's prediction is right or wrong. Thus, since the race stage controlling unit 13 can extend the effect time of effect contents being displayed based on a participant's forecast, the race stage controlling unit 13 can extend the effect time when the user's forecast is right, so that the user can spend an enjoyable time until the result of the race is finally displayed.

The race stage controlling unit 13 may be an contents changing means for changing effect contents being displayed based on whether a participant's forecast is right or not.

After a lapse of the selection time, the client terminal 2 starts the race effect program and displays race contents (step S31). Then, if receiving change contents for changing the display of the ongoing race while the race contents are being displayed, the client terminal 2 provides display corresponding to the received change contents (step S32).

The change contents may be those showing the state where a racehorse being about to enter a gate is reluctant to enter the gate, or those mainly showing the scene where racehorses are running straight along the track, or those mainly showing the scene where they are taking a final turn, for example. The processing in step S32 is not executed when the game controlling apparatus 3 does not transmit change contents to the client terminal 2.

Thereafter, when the processing in steps S26 and S27 has been completed for all the users having bet, the race stage controlling unit 13 transmits the result of the race including the result of lottery (placings) and a payoff to the participant to each client terminal 2 (step S33). Then, the race stage controlling unit 13 sets a start time to the start of the next race (step S34).

Then, the client terminal 2, which has received the race result from the race stage controlling unit 13, displays the received race result on the display screen (step S35, step S36). (A-2-4) Game Termination Processing

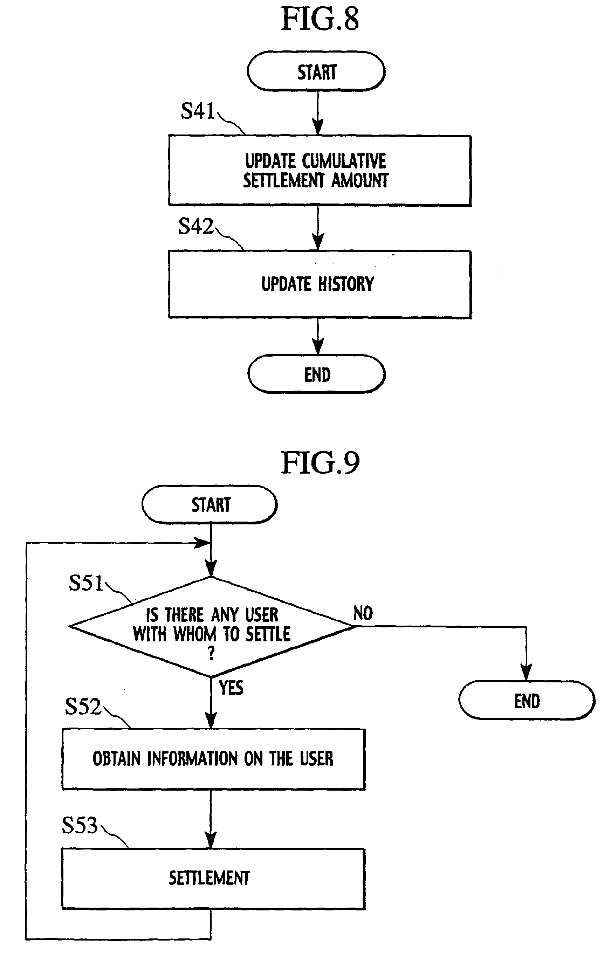

FIG. 8 is a flow chart showing process steps taken by the race stage controlling unit 13 to terminate a game.

A waiting screen for the next race displayed by the client terminal 2 includes an "Entry Exit" icon for the user to reject an entry in the next game. When the user clicks the 'Entry Exit" icon on the client terminal 2, the client terminal 2 transmits a termination command signal for terminating the game to the race stage control unit 13.

Then, upon receiving the termination command signal from the client terminal 2, the race stage controlling unit 13 tallies up payoffs in races and stores the result in the client database 3E as history information, based on the received termination command signal (step S41).

The race stage controlling unit 13 also updates the client database 3E with the race result as history information (step S42).

### (A-2-5) Settlement Processing

FIG. 9 is a flow chart showing a process of settlement performed in the settlement unit 17.

On a settlement date specified by a user, the settlement unit 17 obtains the user's cumulative settlement amount, and performs processing for settling the cumulative settlement amount with a financial institution previously specified (step S52).

Then, the settlement unit 17, which has performed the settlement processing, clears the participant's cumulative settlement amount stored in the client database 3E. Upon settling the cumulative settlement amounts of all users on settlement dates, the settlement unit 17 completes a series of settlement steps (step S51).

### (A-3) Effects of the Embodiment

The above-described game execution system and game execution method can provide the following effects:

Since the client terminal 2 obtains the bet program and the race effect program from the game controlling apparatus 3 and executes the obtained programs, the game controlling apparatus 3 does not need to execute the programs by itself, and can be reduced in processing load when performing game processing.

As a result, the operator running the game controlling apparatus 3 does not need to establish large-scale equipment so that the game controlling apparatus 3 can execute a predetermined game, resulting in a lower amount of investment in equipment.

Moreover, since the client terminal 2 can change effects of an ongoing game sequentially based on change contents for changing contents of the game received from the game controlling apparatus 3, a user having entered the game can enjoy seeing the course of sequential changing of effect contents of the ongoing game.

Moreover, since the game controlling apparatus 3 previously selects a winning racehorse from among racehorses to run a predetermined game, the game controlling apparatus 3 can prevent an exterior terminal from fraudulently deciding a winning horse.

Moreover, since the lottery unit 14 previously selects a racehorse to win a competitive game (the result of a game), the lottery unit 14 can exclude a person trying to fraudulently decide a wining racehorse from an external terminal, so as to increase the authenticity of the result of a game. Also, since the lottery unit 14 selects a racehorse to win a competitive game (the result of a game) within the entry time, the lottery unit 14 can decide the game result of the game before the game is started, so as to secure the authenticity of the game result early.

Moreover, when the race stage controlling unit 13 determines that a winning racehorse forecasted and included in forecast information obtained from a user agrees with a winning racehorse decided by the lottery unit 14, the result processing unit 13 calculates a predetermined amount of money (payoff) to pay to the user, based on the determination by the race stage controlling unit 13, so that the game controlling apparatus 3 can pay the amount of money calculated in the result processing unit 13 to the user, resultantly increasing the number of users to enter games through the game.

Further, since the user can get a predetermined payoff from the game controlling apparatus 3 when his or her forecast is right, the user can enjoy a more heated competitive game to increase his or her money.

Moreover, since the race stage controlling unit 13 can change effect contents of racehorses running a competitive game after a lapse of the entry time, the user can see the effect contents changed by the race stage controlling unit 13 through the screen, so as to spend an enjoyable time before the final result of the game is displayed on the screen.

Further, since the race stage controlling unit 13 can change effect contents according to the number of participants entering a game, the race stage controlling unit 13 can display effect contents of racehorses running a competitive game through various effect contents on screens. As a result, the participants can spend an enjoyable time before the final game result is displayed on the screens.

Furthermore, since the race stage controlling unit 13 can determine the effect time of effect contents displayed on screens according to the number of participants, the race stage controlling unit 13 can set the effect time of effect contents longer when the number of participants is large, for example. In this case, a participant can spend an enjoyable time before the final game result is displayed on the screen with the other participants.

### (B) Modification

The present invention is not limited to the above embodiment, and can be modified as will be described below.

The above embodiment has been described in relation to a game in which a participant can get a predetermined payoff when the participant's forecast is right, but is not limited to the game, and may be applied to a game in which a participant can get a predetermined prize when the participant's forecast is right.

In addition, the race stage controlling unit 13 may alternatively change effect contents of an ongoing race according to the number of users having entered a previous race.

### Industrial Applicability

As described above, the present invention can provide games more enjoyable for users by securely excluding people performing fraudulent manipulation with respect to a server controlling a game, thereby increasing the security of game processing performed between the server and client terminals without imposing excessive processing load on the server.

## Claims

1. A game execution system comprising a game control means for controlling a predetermined game, the game control means allowing the game to be executed between the game control means and a terminal according to an instruction from the terminal.

2. The game execution system as set forth in claim 1, wherein:
the game control means is configured to control the game comprising a plurality of programs; and
the terminal is configured to obtain some of the programs controlled by the game control means, and to execute part of the game based on obtained programs.

3. The game execution system as set forth in claim 2, wherein the game is a mass game a plurality of users enter.

4. The game execution system as set forth in claim 3, wherein the mass game is a competitive game in which a plurality of racehorses race and placings of each of the racehorses are decided.

5. The game execution system as set forth in claim 4, further comprising:
a decision means for deciding a racehorse to win the competitive game; and
an advancement means for advancing the competitive game such that the racehorse decided by the decision means wins the competitive game.

6. The game execution system as set forth in claim 5, further comprising:
a time management means for managing an entry time in which a user can enter the game; wherein,
the decision means decides a racehorse to win the competitive game before the entry time managed by the time management means elapses.

7. The game execution system as set forth in claim 6, further comprising:
an obtainment means for obtaining forecast information showing a forecast of a winning racehorse in the competitive game from the user before the entry time managed by the time management means elapses;
a determination means for determining whether the winning racehorse forecasted and included in the forecast information agrees with the winning racehorse decided by the decision means or not, based on the forecast information obtained by the obtainment means; and
a calculation means for calculating the amount of money to pay to the user based on the determination by the determination means.

8. The game execution system as set forth in claim 6, further comprising:
an effect decision means for deciding effect contents of each of the racehorses to race in the competitive game after a lapse of the entry time managed by the time management means; and
a display means for displaying the effect contents decided by the effect decision means.

9. The game execution system as set forth in claim 8, further comprising:
a count means for counting the number of users entering the game; wherein,
the effect decision means is configured to decide the effect contents, in accordance with the number of users counted by the count means.

10. The game execution system as set forth in claim 9, wherein the effect decision means is configured to decide an effect time of the effect contents, in accordance with the number of users counted by the count means.

11. The game execution system as set forth in claim 1, further comprising:
a final decision means for previously deciding a final result of the game;
a forecast obtaining means for obtaining a result of forecasting showing a forecast of the final result from the user; and
a result determination means for determining, based on the final result decided by the final decision means and the forecast result obtained by the forecast obtaining means, whether the final result agrees with the forecast result or not.

12. The game execution system as set forth in claim 11, further comprising:
a start management means for managing a start time to display the effect contents and
a display means for displaying the effect contents when the start time managed by the start management means elapsed.

13. The game execution system as set forth in claim 11, wherein:
the final decision means is configured to decide the final result of the game before the start time managed by the start management means elapses.

14. The game execution system as set forth in claim 11, further comprising a contents changing means for changing the effect contents, based on the determination by the result determination means.

15. The game execution system as set forth in claim 11, further comprising an extension means for extending the effect time of the effect contents, based on the determination by the result determination means.

16. The game execution system as set forth in claim 11, further comprising a notification means for notifying the terminal of the determination by the result determination means or the final result.

17. The game execution system as set forth in claim 11, wherein the notification means notifies the terminal of the determination by the result determination means or the final result after a lapse of the start time managed by the start management means.

18. The game execution system as set forth in claim 1, further comprising:
an authentication means for obtaining identification information identifying the user and checking whether the user is an authentic person or not, based on obtained identification information; and
a transmission means for transmitting some of the programs of the game, based on the result of the checking by the authentication means.

19. A game execution method comprising, at a game control means for controlling a predetermined game, allowing the game to be executed between the game control means and a terminal according to an instruction from the terminal.

20. The game execution method as set forth in claim 19, further comprising the steps of:
at the game control means, controlling the game comprising a plurality of programs; and
at the terminal, obtaining some of the programs controlled by the game control means, and executing part of the game based on the obtained programs.

21. The game execution method as set forth in claim 20, wherein the game is a mass game a plurality of users enter.

22. The game execution method as set forth in claim 21, wherein the mass game is a competitive game in which a plurality of racehorses race and placings of each of the racehorses are decided.

23. The game execution method as set forth in claim 22, further comprising the steps of:
deciding a racehorse to win the competitive game; and
advancing the competitive game such that the decided racehorse wins the competitive game.

24. The game execution method as set forth in claim 23, further comprising the steps of:
managing an entry time in which a user can enter the game; and
deciding a racehorse to win the competitive game before the managed entry time elapses.

25. The game execution method as set forth in claim 24, further comprising the steps of:
obtaining forecast information showing a forecast of a winning racehorse in the competitive game from the user before the managed entry time elapses;
determining, based on obtained forecast information, whether the winning racehorse forecasted and included in the forecast information agrees with the winning racehorse decided by the decision means; and
calculating the amount of money to pay to the user based on the determination.

26. The game execution method as set forth in claim 24, further comprising the steps of:
deciding effect contents of each of the racehorses to race in the competitive game after a lapse of the managed entry time; and
displaying decided effect contents.

27. The game execution method as set forth in claim 26, further comprising the steps of:
counting the number of users entering the game; and
deciding the effect contents in accordance with the counted number of users.

28. The game execution method as set forth in claim 27, further comprising the step of deciding an effect time of the effect contents in accordance with the counted number of users.

29. The game execution method as set forth in claim 19, further comprising the steps of:
deciding a final result of the game previously;
obtaining a result of forecasting showing a forecast of the final result from the user; and
determining, based on a decided final result and an obtained forecast result, whether the final result agrees with the forecast result or not.

30. The game execution method as set forth in claim 29, further comprising the steps of:
managing a start time to display the effect contents; and
displaying the effect contents when the managed start time elapsed.

31. The game execution method as set forth in claim 29, further comprising the step of deciding the final result of the game before the managed start time elapses.

32. The game execution method as set forth in claim 29, further comprising the step of changing the effect contents based on the result of the determination.

33. The game execution method as set forth in claim 29, further comprising the step of extending the effect time of the effect contents based on the result of the determination.

34. The game execution method as set forth in claim 29, further comprising the step of notifying the terminal of the result of the determination or the final result.

35. The game execution method as set forth in claim 29, further comprising the step of notifying the terminal of the result of the determination or the final result after a lapse of the managed start time.

36. The game execution method as set forth in claim 19, further comprising the steps of:
obtaining identification information identifying the user and checking whether the user is an authentic person or not, based on the obtained identification information; and
transmitting some of the programs of the game, based on the result of the checking.
